# FASCICULE DE BREVET EUROPEEN

(11) **EP 1 966 029 B1**
(45) Date de publication et mention de la délivrance du brevet: **08.09.2010**
(21) Numéro de dépôt: 06841955.5
(22) Date de dépôt: 15.12.2006
(51) Int. Cl.: B62D 7/06, B62D 21/11

(54) **VEHICULE TOUT TERRAIN A PLUSIEURS ESSIEUX MOTEURS**
GELÄNDEFAHRZEUG MIT MEHREREN ANTRIEBSACHSEN
ALL-TERRAIN VEHICLE WITH MULTIPLE DRIVE AXLES

(30) Priorité: 19.12.2005 FR 0512899
(43) Date de publication de la demande: 10.09.2008
(73) Titulaire: Renault Trucks, 69800 Saint Priest (FR)
(72) Inventeur: DELOUMEAU, François, F-75015 Paris (FR)
(74) Mandataire: Putet, Gilles
(86) Numéro de dépôt international: PCT/FR2006/002752
(87) Numéro de publication internationale: WO 2007/080281

(56) Documents cités:
- EP-A- 0 287 278
- WO-A-2006/041441
- GB-A- 2 365 829
- US-A- 5 820 150
- US-B1- 6 398 262

## Description

La présente invention concerne un véhicule de type tout terrain, et plus particulièrement un véhicule à plusieurs essieux moteurs permettant un remplacement et/ou un échange facilité d'un ou plusieurs essieux endommagés.

De façon générale, les véhicules tout terrain à plusieurs essieux moteurs comportent un arbre de transmission longitudinal qui distribue l'énergie du moteur aux divers essieux du véhicule par l'intermédiaire d'une boîte de transmission. Par ailleurs, dans ces véhicules, la suspension est assurée par des bras de suspension pivotants qui, à l'une de leurs extrémités, sont montés à rotation sur le châssis ou sur la boîte, et à leur autre extrémité sont montés à rotation sur un ensemble de roulement qui comprend un ensemble de freinage, des éléments d'orientation d'un moyeu porteur d'une roue et éventuellement un réducteur.

Lorsqu'un véhicule de ce type, pour une raison quelconque, se trouve à avoir l'un de ses essieux essentiels hors service, notamment l'essieu qui assure sa direction, il n'est pas possible d'intervenir de façon simple et rapide sur ce véhicule pour remplacer l'essieu déficient par celui de ses autres essieux qui n'est pas rigoureusement indispensable à son déplacement, ou par un essieu identique d'un autre véhicule. Ceci est d'autant plus regrettable que l'on peut disposer à proximité, notamment dans le cas où un parc de véhicules est en action sur un même site, de plusieurs autres véhicules sur lesquels il serait possible de prélever les éléments déficients.

Un véhicule conformément au préambule de la revendication 1 est connu du document US-A-5 820 150.

La présente invention a pour but de proposer un véhicule de type tout terrain, permettant, de façon simple et rapide, de permuter entre eux certains des essieux d'un même véhicule ou de remplacer un essieu déficient d'un véhicule par un essieu opérationnel d'un autre véhicule.

La présente invention a ainsi pour objet un véhicule, de type tout terrain, comportant une structure supportant un plancher et au moins deux essieux moteurs identiques, chacun de ceux-ci comportant :
- deux ensembles de roulement comprenant chacun des moyens de freinage et un moyeu support d'une roue,
- des éléments de suspension reliant chaque ensemble de roulement à un élément fixe par rapport à la structure,
- des moyens d'orientation permettant de faire pivoter chaque ensemble de roulement par rapport aux éléments de suspension autour d'un axe sensiblement vertical, sous l'action d'une commande de direction,
- un pont apte à transférer l'énergie motrice fournie par un arbre de transmission, aux roues du véhicule via les ensembles de roulement,
**caractérisé en ce que** chaque essieu comporte un caisson, qui est solidarisé de façon amovible du plancher, sur lequel sont articulés les éléments de suspension, et sur lequel est fixé le pont du véhicule.

Le terme structure comprendra aussi bien la structure porteuse ou en treillis du véhicule que son châssis ou son plancher.

Le pont du véhicule sera préférentiellement fixé sur le caisson par l'intermédiaire de moyens d'amortissement, tels que par exemple des rondelles empilées en matériau élastomère, ce qui présente l'avantage d'éliminer les vibrations et les causes de résonance qui sont habituellement transmises à la structure du véhicule par l'arbre de transmission.

Les éléments de suspension pourront être constitués de deux bras sensiblement parallèles, dont l'une des extrémités sera montée articulée sur le caisson et l'autre extrémité sera articulée sur un ensemble de roulement.

Suivant l'invention les bras de suspension pourront avoir une forme globale en Y et comporteront ainsi deux branches formant fourche dont les extrémités seront articulées sur le caisson, et une branche centrale solidaire d'un ensemble de roulement. Préférentiellement l'articulation des branches se fera par l'intermédiaire d'un palier de suspension élastique à rappel de couple en torsion.

Le bras de suspension supérieur pourra être incurvé vers le bas, ce qui autorise un débattement plus important de la caisse disposée au-dessus des essieux du véhicule.

Dans un mode de mise en oeuvre intéressant de l'invention, à chaque roue du véhicule sera associé au moins un système de suspension dont l'une des extrémités sera solidaire à rotation du plancher et l'autre extrémité sera solidaire à rotation d'un élément de suspension, le point de fixation du système de suspension sur ledit élément de suspension se situant environ aux trois quart de la longueur de celui-ci à partir de son articulation sur le caisson.

Dans un autre mode de mise en oeuvre de l'invention au moins un essieu comprend des biellettes reliant respectivement la commande de direction à chaque ensemble de roulement d'un essieu, le caisson ou le plancher du véhicule comportant des moyens de fixation aptes à recevoir une extrémité des biellettes solidarisées par leur autre extrémité à un ensemble de roulement associé à cet essieu.

On décrira ci-après, à titre d'exemple non limitatif, diverses formes d'exécution de la présente invention, en référence au dessin annexé sur lequel :
- la figure 1 est une vue schématique générale d'un véhicule tout terrain suivant l'invention ;
- la figure 2 est une vue en perspective de l'un des essieux du véhicule représenté sur la figure 1,
- la figure 3a est une vue en perspective d'un caisson assurant le maintien des différents éléments d'un essieu moteur,
- la figure 3b est une vue en perspective d'un pont de transmission destiné à prendre place dans le caisson représenté sur la figure 3a,
- la figure 4 est une vue partielle en perspective d'un côté du caisson représenté sur la figure 3a équipé de bras de suspension supérieur et inférieur,
- la figure 5 est une vue en perspective de détails montrant le montage d'un vérin amortisseur sur un bras de suspension inférieur,
- la figure 6 est une vue d'une extrémité d'une branche de la fourche formée par un bras de suspension, l'élément rotatif de suspension élastique dont est équipé ce bras de suspension étant retiré.

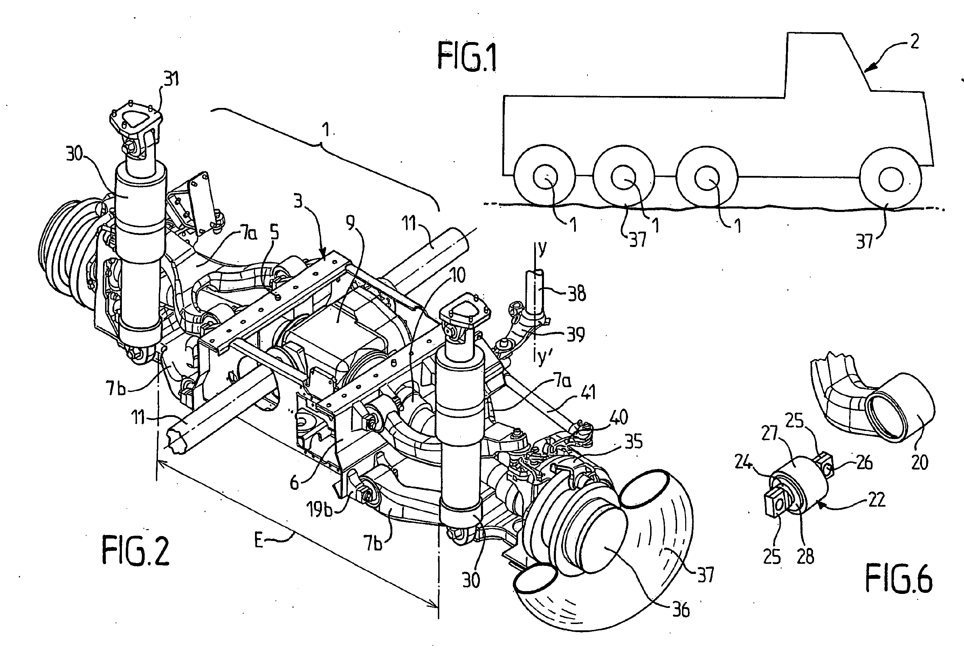

On a représenté sur la figure 1 un véhicule 2 de type tout terrain suivant l'invention, qui comprend une structure supportant plusieurs essieux 1 qui sont identiques de façon à favoriser leur interchangeabilité. Chaque essieu 1 est essentiellement constitué d'un caisson 3 qui est fixé de façon facilement amovible et interchangeable sur le plancher du véhicule par une série de vis 5. Le caisson 3 assure le maintien, d'une part sur chacun de ses côtés latéraux opposés 6, de deux bras de suspension sensiblement parallèles, à savoir un bras supérieur 7a et un bras inférieur 7b, et, d'autre part, d'un pont 9 qui est relié, par un arbre de transmission longitudinal 11, aux ponts respectivement associés aux autres essieux 1 du véhicule. La fixation directe d'un caisson facilement amovible sur le plancher du véhicule plutôt que sur des éléments de châssis simplifie grandement la constitution mécanique de l'ensemble ainsi qu'à la fois le montage et le démontage du caisson.

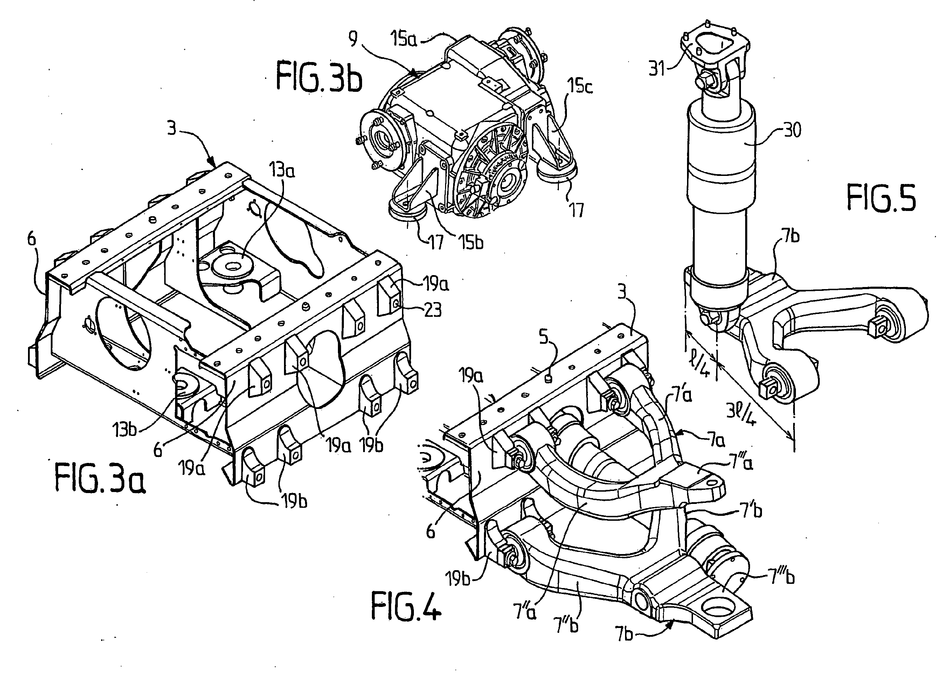

Ainsi que représenté sur les figures 3a et 3b, le caisson 3 est pourvu de trois platines réceptrices horizontales 13a,13b,13c et le pont 9 est pourvu de pattes de fixation correspondantes, respectivement 15a,15b,15c, par lesquelles il est fixé dans le caisson 3 avec interposition de rondelles de suspension élastiques 17.

Un tel mode de fixation présente l'avantage, par rapport à ceux de l'état antérieur de la technique, d'éliminer les transmissions de vibrations et les résonances qui sont habituellement retransmises au châssis par l'arbre de transmission du véhicule, ce qui confère au présent véhicule un grand confort pour ses utilisateurs. Chacune des faces latérales 6 du caisson 3 comporte des éléments de fixation, à savoir quatre bossages de fixation supérieurs 19a et quatre bossages de fixation inférieurs 19b qui sont respectivement destinés à supporter les bras de suspension 7a et 7b.

Ainsi que représenté en détails sur la figure 4, les bras de suspension 7a et 7b ont une forme en Y et comportent ainsi chacun trois branches, à savoir deux branches supérieures formant une fourche, respectivement 7' a et 7" a d'une part et 7'b et 7"b d'autre part, qui sont destinées à se fixer sur le caisson 3, et une branche centrale 7"'a et 7"'b destinée à soutenir un ensemble de roulement de type classique. Les branches supérieures 7'a-7"a et inférieures 7'b-7"b se terminent chacune par une cage tubulaire 20 destinée à recevoir un élément rotatif de suspension à rappel élastique 22. Ce dernier est constitué d'un axe central 24 se terminant à chacune de ses extrémités par une plaquette de fixation 25 percée d'un trou 26, qui est solidarisée d'un produit élastomère élastique 28 possédant une constante de torsion spécifique, fonction de l'importance du couple de rappel que l'on souhaite appliquer aux bras de suspension 7a et 7b, et qui est elle-même entourée d'une bague rigide 27 qui vient se fixer dans la cage 20.

Ainsi que représenté sur les dessins, chacune des plaquettes 25 est fixée par vissage dans un trou fileté 23 des bossages 19a-19b. On comprend dans ces conditions que le couple de rotation exercé par l'élément rotatif de suspension élastique 22 joue un rôle actif dans la suspension de l'ensemble de roulement par rapport au châssis.

Chaque ensemble de roulement reçoit son énergie du pont 9 auquel il est relié par un cardan 10.

La suspension comporte également un vérin 30 de type classique, dont la partie inférieure est solidaire du bras de suspension inférieur 7b et la partie supérieure est fixée par une platine 31 sur le plancher du véhicule, non représenté sur le dessin.

Suivant l'invention, en raison du couple de rappel exercé par les quatre éléments rotatifs de suspension élastique 22 des deux bras de suspension 7a-7b, il est possible de diminuer la puissance, et donc la taille, du vérin de suspension 30, ce qui permet de gagner en dimension dans le sens transversal, et donc d'augmenter l'écartement disponible E existant entre deux vérins 30 d'un même essieu, ce qui fait gagner un volume précieux permettant de faire appel à un habitacle de plus grande largeur.

Les deux bras de suspension 7a et 7b assurent le maintien d'un ensemble de roulement qui comprend un réducteur, des freins à disques 35 solidaires d'un moyeu 36 d'une roue 37 et de moyens de guidage permettant de faire tourner l'ensemble de roulement autour d'un axe sensiblement vertical afin de permettre d'assurer la conduite du véhicule. Les moyens de guidage sont commandés par une colonne de direction 38 apte à tourner autour d'un axe vertical yy' et qui commande la rotation d'un organe 39 transmettant le mouvement de rotation à un organe récepteur 40 de l'ensemble de roulement, par l'intermédiaire d'une biellette de direction 41.

Bien entendu dans un même véhicule tous les essieux ne sont pas directeurs mais, si l'on souhaite disposer d'un véhicule dont les essieux soient interchangeables, on comprend qu'il est particulièrement intéressant d'être en mesure de transformer rapidement et facilement un essieu fixe en un essieu interchangeable et inversement. Suivant l'invention, il suffit ainsi, pour transformer un essieu directeur en essieu fixe, de relier la biellette de direction 41 au plancher ou au caisson du véhicule et, pour transformer un essieu fixe en essieu directeur, de relier la biellette 41 à l'organe 39 commandé en rotation par la colonne de direction 38.

La présente invention permet, de façon relativement simple, d'utiliser un ou plusieurs essieux d'un véhicule immobilisé pour dépanner un ou plusieurs autres véhicules dont les essieux sont endommagés et les rendre ainsi opérationnels. Elle permet également, plus simplement, de supprimer un ou plusieurs essieux endommagés d'un véhicule ce qui peut permettre de le rendre opérationnel même avec une efficacité amoindrie.

## Revendications

1. Véhicule, de type tout terrain, comportant une structure supportant un plancher et au moins deux essieux moteurs (1) identiques, chacun de ceux-ci comportant :
- deux ensembles de roulement comprenant chacun des moyens de freinage (35) et un moyeu (36) support d'une roue (37),
- des éléments de suspension (7a,7b) reliant chaque ensemble de roulement à un élément fixe par rapport à la structure,
- des moyens d'orientation (39,40,41) permettant de faire pivoter chaque ensemble de roulement par rapport aux éléments de suspension (7a,7b) autour d'un axe sensiblement vertical, sous l'action d'une commande de direction (38),
- un pont (9) apte à transférer l'énergie motrice, fournie par un arbre de transmission (11), aux roues (37) du véhicule via les ensembles de roulement,
**caractérisé en ce que** chaque essieu (1) comporte un caisson (3), qui est solidarisé de façon amovible du plancher, sur lequel sont articulés les éléments de suspension (7a,7b), et sur lequel est fixé le pont (9) du véhicule.

2. Véhicule suivant la revendication 1 **caractérisé en ce que** le pont (9) est fixé sur le caisson (3) avec interposition d'éléments d'amortissement (17).

3. Véhicule suivant l'une des revendications précédentes, **caractérisé en ce que** les éléments de suspension (7a,7b) sont constitués de deux bras sensiblement parallèles, dont l'une des extrémités est montée articulée sur le caisson (3) et l'autre extrémité est montée articulée sur un ensemble de roulement.

4. Véhicule suivant la revendication 3, **caractérisé en ce que** les bras de suspension (7a, 7b) ont une forme globale en Y et comportent ainsi deux branches formant fourche (7'a,7"a ; 7'b,7"b) dont les extrémités sont articulées sur le caisson (3) et une branche centrale (7"'a,7"'b) solidarisée d'un ensemble de roulement.

5. Véhicule suivant l'une des revendications 3 ou 4 **caractérisé en ce que** les bras de suspension (7a,7b) sont articulés sur le caisson (3) par l'intermédiaire d'un palier (22) de suspension élastique en torsion.

6. Véhicule suivant la revendication 5 **caractérisé en ce que** le palier de suspension est constitué d'un élément (22) à rappel de couple en torsion.

7. Véhicule suivant l'une des revendications 5 ou 6 **caractérisé en ce que** le bras de suspension supérieur (7a) est incurvé vers le bas.

8. Véhicule suivant l'une des revendications précédentes, **caractérisé en ce que**, à chaque roue de celui-ci, est associé au moins un système de suspension (30) dont l'une des extrémités est solidaire à rotation du plancher et l'autre extrémité est solidaire à rotation d'un élément de suspension (7a,7b), le point de fixation du système de suspension (30) sur l'élément de suspension (7b) se situant environ aux trois quart de la longueur (1) de celui-ci à partir de son articulation sur le caisson.

9. Véhicule suivant l'une des revendications précédentes, **caractérisé en ce que** au moins un essieu comprend des biellettes (41) reliant respectivement la commande de direction (38,39) à chaque ensemble de roulement d'un essieu (1), le caisson ou le plancher du véhicule comportant des moyens de fixation aptes à recevoir une extrémité des biellettes (41) solidarisées par leur autre extrémité à un ensemble de roulement associé à cet essieu.

## Claims

1. Vehicle, of the all-terrain type, comprising a structure supporting a floor and at least two identical driven axles (1) each of these comprising:
- two sets of running gear, each comprising braking means (35) and a hub (36) supporting a wheel (37),
- suspension elements (7a, 7b) connecting each set of running gear to an element that is fixed with respect to the structure,
- orienting means (39, 40, 41) allowing each set of running gear to be pivoted with respect to the suspension elements (7a, 7b) about a substantially vertical axis under the action of a steering control (38),
- an axle unit (9) able to transfer the drive, supplied by a transmission shaft (11), to the wheels (37) of the vehicle via the sets of running gear,
**characterized in that** each axle (1) comprises a box structure (3) which is secured removably to the floor, to which the suspension elements (7a, 7b) are articulated, and to which the vehicle axle unit (9) is attached.

2. Vehicle according to Claim 1, **characterized in that** the axle unit (9) is fixed to the box structure (3) with the interposition of damping elements (17).

3. Vehicle according to one of the preceding claims, **characterized in that** the suspension elements (7a, 7b) consist of two substantially parallel arms, one of the ends of which is mounted articulated to the box structure (3) and the other end of which is mounted articulated to a set of running gear.

4. Vehicle according to Claim 3, **characterized in that** the suspension arms (7a, 7b) are in the overall shape of a Y and thus comprise two forked branches (7'a, 7"a; 7'b, 7"b) the ends of which are articulated to the box structure (3) and a central branch (7"'a, 7"'b) secured to a set of running gear.

5. Vehicle according to either of Claims 3 and 4, **characterized in that** the suspensions arms (7a, 7b) are articulated to the box structure (3) via a suspension bearing (22) that is elastic in torsion.

6. Vehicle according to Claim 5, **characterized in that** the suspension bearing consists of a return-moment torsion element (22).

7. Vehicle according to either of Claims 5 and 6, **characterized in that** the upper suspension arm (7a) curves downwards.

8. Vehicle according to one of the preceding claims, **characterized in that** associated with each wheel thereof is at least one suspension system (30) one of the ends of which is secured in terms of rotation to the floor and the other end of which is secured in terms of rotation to a suspension element (7a, 7b), the point of attachment of the suspension system (30) to the suspension element (7b) being situated approximately three-quarters of the way along the length (1) thereof measured from its articulation to the box structure.

9. Vehicle according to one of the preceding claims, **characterized in that** at least one axle comprises links (41) respectively connecting the steering control (38, 39) to each set of running gear of an axle (1), the box structure or the floor of the vehicle comprising fixing means able to accept one end of the links (41) which are secured via their other end to a set of running gear associated with this axle.

## Patentansprüche

1. Geländefahrzeug mit einem Aufbau, der einen Boden und wenigstens zwei identische Antriebsachsen (1) trägt, von denen jede
- zwei Radlagereinheiten, die jeweils Bremseinrichtungen (35) und eine ein Rad (37) lagernde Nabe (36) aufweisen,
- Aufhängungselemente (7a, 7b), die jede Radlagereinheit mit einem bezüglich des Aufbaus fixen Element verbinden,
- Ausrichtungseinrichtungen (39, 40, 41), die es erlauben, jede Radlagereinheit durch Einwirken einer Lenkungssteuerung (38) bezüglich der Aufhängungselemente (7a, 7b) um eine im Wesentlichen vertikale Achse zu drehen, und
- eine Brücke (9) umfasst, die in der Lage ist, die durch eine Getriebewelle (11) gelieferte Antriebsenergie über die Radlagereinheiten auf die Räder (37) des Fahrzeugs zu übertragen,
**dadurch gekennzeichnet, dass** jede Achse (1) einen Kasten (3) umfasst, der lösbar an dem Boden festgelegt ist, an dem die Aufhängungselemente (7a, 7b) angelenkt sind und an dem die Brücke (9) des Fahrzeugs befestigt ist.

2. Fahrzeug nach Anspruch 1, **dadurch gekennzeichnet, dass** die Brücke (9) an dem Kasten (3) unter Zwischenlegung von Dämpfungselementen (17) befestigt ist.

3. Fahrzeug nach einem der vorhergehenden Ansprüche, **dadurch gekennzeichnet, dass** die Aufhängungselemente (7a, 7b) von zwei im Wesentlichen parallelen Armen gebildet werden, wobei eines der Enden gelenkig an dem Kasten (3) befestigt ist und das andere Ende gelenkig an einer Radlagereinheit befestigt ist.

4. Fahrzeug nach Anspruch 3, **dadurch gekennzeichnet, dass** die Aufhängungsarme (7a, 7b) die Gesamtform eines Y haben und also zwei Schenkel, die eine Gabel bilden (7'a, 7"a; 7'b, 7"b), deren Enden an dem Kasten (3) angelenkt sind, und einen Mittelschenkel (7"'a, 7"'b) umfassen, der mit einer Radlagereinheit fest verbunden ist.

5. Fahrzeug nach einem der Ansprüche 3 oder 4, **dadurch gekennzeichnet, dass** die Aufhängungsarme (7a, 7b) an dem Kasten (3) über ein torsionseiastisches Aufhängungslager (22) angelenkt sind.

6. Fahrzeug nach Anspruch 5, **dadurch gekennzeichnet, dass** das Aufhängungslager von einem Element (22) mit Torsionsmomentrückstellung gebildet wird.

7. Fahrzeug nach einem der Ansprüche 5 oder 6, **dadurch gekennzeichnet, dass** der obere Aufhängungsarm (7a) nach unten hin gebogen ist.

8. Fahrzeug nach einem der vorhergehenden Ansprüche, **dadurch gekennzeichnet, dass** jedem seiner Räder wenigstens ein Aufhängungssystem (30) zugeordnet ist, dessen eines Ende drehfest mit dem Boden und dessen anderes Ende drehfest mit einem Aufhängungselement (7a, 7b) verbunden ist, wobei sich der Fixierungspunkt des Aufhängungssystems (30) auf dem Aufhängungselement (7b) etwa auf drei Viertel von dessen Länge (1) ausgehend von seiner Anlenkung an dem Kasten befindet.

9. Fahrzeug nach einem der vorhergehenden Ansprüche, **dadurch gekennzeichnet, dass** wenigstens eine Achse Schwingarme (41) aufweist, die jeweils die Lenkungssteuerung (38, 39) mit jeder Radlagereinheit einer Achse (1) verbinden, wobei der Kasten oder der Boden des Fahrzeugs Befestigungseinrichtungen umfassen, die ein Ende der Schwingarme (41) aufnehmen können, die mit ihrem anderen Ende an einer dieser Achse zugeordneten Radlagereinheit festgelegt sind.
